# EUROPÄISCHE PATENTANMELDUNG

(11) **EP 4 350 161 A1**
(43) Veröffentlichungstag der Anmeldung: **10.04.2024**
(21) Anmeldenummer: 22199952.7
(22) Anmeldetag: 06.10.2022
(51) Int. Cl.: F16D 7/02, F16D 1/095

(54) **VORRICHTUNG ZUR MECHANISCHEN ÜBERLASTSICHERUNG UND HERSTELLUNGSVERFAHREN DAFÜR**

(71) Anmelder: Hilti Aktiengesellschaft, 9494 Schaan (LI)
(72) Erfinder: Puchele, Benjamin, 87672 Roßhaupten (DE); Schittl, Josef, 6712 Thueringen (AT); Hinterstoißer, Michael, 82275 Emmering (DE); Enzenhofer, Martin, 6800 Feldkirch (AT); Hernandez Gonzalez, Andres, 87616 Marktoberdorf (DE); Huber, Franz, 86865 Markt Wald / Oberneufnach (DE); Müller, Markus, 6707 Bürserberg (AT)
(74) Vertreter: Hilti Aktiengesellschaft Corporate Intellectual Property

(57) **Zusammenfassung**

Die vorliegende Erfindung betrifft eine Vorrichtung zur mechanischen Überlastsicherung in einem Antriebsstrang einer Werkzeugmaschine, wobei der Antriebsstrang eine Abtriebsseite mit einer Abtriebswelle und eine Antriebsseite mit einer Motorwelle aufweist. Die Abtriebswelle liegt über ein Verbindungsmittel mit der Motorwelle wirkverbunden vor, wobei die Vorrichtung zur mechanischen Überlastsicherung durch eine Pressverbindung zwischen dem Verbindungsmittel auf der einen Seite und der Motorwelle oder der Abtriebswelle auf der anderen Seite gebildet wird. In einem zweiten Aspekt betrifft die Erfindung ein Verfahren zur Herstellung einer solchen Vorrichtung zur mechanischen Überlastsicherung in einer Werkzeugmaschine. Mit der Erfindung können die bevorzugt kurzzeitig auftretenden Spitzendrehmomente im Antriebsstrang erheblich vermindert werden und die Werkzeugmaschine und ihre mechanischen Komponenten im Blockierfall vor Schäden geschützt werden.

## Beschreibung

Die vorliegende Erfindung betrifft eine Vorrichtung zur mechanischen Überlastsicherung in einem Antriebsstrang einer Werkzeugmaschine, wobei der Antriebsstrang eine Abtriebsseite mit einer Abtriebswelle und eine Antriebsseite mit einer Motorwelle aufweist. Die Abtriebswelle liegt über ein Verbindungsmittel mit der Motorwelle wirkverbunden vor, wobei die Vorrichtung zur mechanischen Überlastsicherung durch eine Pressverbindung zwischen dem Verbindungsmittel auf der einen Seite und der Motorwelle oder der Abtriebswelle auf der anderen Seite gebildet wird. In einem zweiten Aspekt betrifft die Erfindung ein Verfahren zur Herstellung einer solchen Vorrichtung zur mechanischen Überlastsicherung in einer Werkzeugmaschine. Mit der Erfindung können die bevorzugt kurzzeitig auftretenden Spitzendrehmomente im Antriebsstrang erheblich vermindert werden und die Werkzeugmaschine und ihre mechanischen Komponenten im Blockierfall vor Schäden geschützt werden.

### Hintergrund der Erfindung:

Im Bereich der Werkzeugmaschinen sind mechanische Rutschkupplungen bekannt, um die Werkzeugmaschine und ihre Komponenten vor hohen mechanischen Belastungen zu schützen, wenn beispielsweise das Werkzeug der Werkzeugmaschine blockiert oder sich in dem zu bearbeitenden Untergrund verklemmt ("Blockierfall"). Der Schutz, den eine mechanische Rutschkupplung gewährt, beruht insbesondere darauf, dass der Antriebsstrang mechanisch getrennt wird, wenn es zu einem Blockierfall kommt oder wenn ein Blockierfall detektiert wird. Mit solchen mechanischen Rutschkupplungen kann einerseits der Antriebsstrang der Werkzeugmaschine vor den hohen mechanischen Belastungen geschützt werden, die in einem solchen Blockierfall auftreten. Andererseits kann auch der Nutzer der Werkzeugmaschine vor möglichen Verletzungen geschützt werden, wenn der Antriebsstrang im Blockierfall durch die Rutschkupplung mechanisch getrennt wird.

Im Zuge der technischen Weiterentwicklung im Bereich der Werkzeugmaschinen besteht allerdings ein Bestreben, keine mechanischen Lösungen für einzelne Anwendungsfälle mehr vorzusehen, sondern stattdessen elektronische und/oder mechatronische Lösungen zu verwenden.

Beispielsweise sind im Stand der Technik elektronische Rutschkupplungs-Lösungen bekannt, sowie Lösungen zur Regulierung des Drehmoments in der Werkzeugmaschine. Diese Funktionen oder Lösungen sind zwar dazu in der Lage, den Nutzer vor den Auswirkungen, die bei einem Blockierfall auftreten können, zu schützen. Allerdings sind diese elektronischen und/oder mechatronischen Lösungen häufig nicht in der Lage, die oftmals sehr kurzzeitig auftretenden Spitzendrehmomente im Antriebsstrang der Werkzeugmaschine zu begrenzen. Dieses Unvermögen ist insbesondere darauf zurückzuführen, dass die elektronischen und/oder mechatronischen Lösungen keine mechanische Trennung des Antriebsstrangs bewirken können, wie es beispielsweise eine mechanische Rutschkupplung vermag.

Der Umgang mit solchen kurzzeitig auftretenden Spitzendrehmomenten im Antriebsstrang, wenn auf eine mechanische Rutschkupplung verzichtet werden soll, stellt insbesondere eine Herausforderung für Kernbohrgeräte oder andere Werkzeugmaschinen mit torsionssteifen Werkzeugen dar. Beispielsweise wird an Kernbohrgeräten eine Bohrkrone als Werkzeug eingesetzt, wobei solche Bohrkronen einen Hohlzylinder umfassen, mit dem ein zylinderförmiger Bohrkern aus einem zu bearbeitenden Untergrund herausgeschnitten werden kann. Allerdings sind solche Bohrkronen vergleichsweise torsionssteif, so dass die großen Kräfte, die auftreten können, wenn das Werkzeug der Werkzeugmaschine blockiert oder sich in dem zu bearbeitenden Untergrund verklemmt, allenfalls in einem geringen Maße von der Bohrkrone aufgenommen werden können. Die nicht von der Bohrkrone aufgenommenen Kräfte werden nachteiligerweise in den Antriebsstrang eingeleitet und können dort zu Schäden an der Werkzeugmaschine oder ihrer Komponenten führen.

Um solche Schäden zu vermeiden, ist im Stand der Technik vorgeschlagen worden, die Mechanik des Antriebsstrangs der Werkzeugmaschine besonders robust auszulegen. Dadurch soll sichergestellt werden, dass auch sehr große Spitzendrehmomente oder Kräfte, die im Blockierfall auftreten können, von der Mechanik der Werkzeugmaschine aufgenommen werden können, ohne dass es zu Schäden an der Werkzeugmaschine oder ihren Komponenten kommt. Es hat sich allerdings gezeigt, dass Werkzeugmaschinen mit einer so robusten und dadurch zumeist überdimensionierten Mechanik sehr schwer sind. Dadurch kann die Handhabung solcher Werkzeugmaschinen deutlich erschwert sein oder es verkürzt sich die Zeitspanne, die ein Nutzer mit der Werkzeugmaschine zu arbeiten vermag.

Die Aufgabe, die der vorliegenden Erfindung zugrunde liegt, besteht darin, die vorstehend beschriebenen Mängel und Nachteile des Standes der Technik zu überwinden und eine Werkzeugmaschine bereitzustellen, bei der die Auswirkungen der kurzzeitig auftretenden Spitzendrehmomente im Antriebsstrang vermindert werden können, dies insbesondere auch bei Werkzeugmaschinen mit torsionssteifen Werkzeugen. Darüber hinaus soll die bereitzustellende Werkzeugmaschine besonders leicht und kompakt ausgebildet sein, so dass die Handhabung der Werkzeugmaschine erleichtert wird und eine Zeitspanne, die ein Nutzer mit der Werkzeugmaschine zu arbeiten vermag, verlängert werden kann. Insbesondere soll eine Werkzeugmaschine bereitgestellt werden, bei der trotz Vorhandensein von elektronischen und/oder mechatronischen Funktionen ein wirksamer Schutz des Antriebsstrangs der Werkzeugmaschine vor mechanischen Schäden im Blockierfall ermöglicht werden kann.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zur mechanischen Überlastsicherung in einem Antriebsstrang einer Werkzeugmaschine vorgesehen. Der Antriebsstrang weist eine Abtriebsseite mit einer Abtriebswelle und eine Antriebsseite mit einer Motorwelle auf. Der Vorrichtung zur mechanischen Überlastsicherung wird im Sinne der Erfindung bevorzugt auch als «mechanische Überlastsicherung» bezeichnet und ist dadurch gekennzeichnet, dass die Abtriebswelle über ein Verbindungsmittel mit der Motorwelle wirkverbunden vorliegt, wobei die Vorrichtung zur mechanischen Überlastsicherung durch eine Pressverbindung zwischen dem Verbindungsmittel auf der einen Seite und der Motorwelle oder der Abtriebswelle auf der anderen Seite gebildet wird. Bei dem Verbindungsmittel kann es sich vorzugsweise um ein Zahnrad oder eine eigens dafür vorgesehene Buchse handeln. Es ist im Sinne der Erfindung bevorzugt, dass die Abtriebswelle über ein Zahnrad von der Motorwelle antreibbar ist, wobei die Vorrichtung zur mechanischen Überlastsicherung in dieser Ausgestaltung der Erfindung durch eine Pressverbindung zwischen dem Zahnrad auf der einen Seite und der Motorwelle oder der Abtriebswelle auf der anderen Seite gebildet werden kann. Es kann im Sinne der Erfindung auch bevorzugt sein, dass die mechanische Überlastsicherung ohne ein Zahnrad auskommt, wenn die Motorwelle und die Abtriebswelle über eine Buchse als Verbindungsmittel miteinander wirkverbunden vorliegen. Die vorgeschlagene Vorrichtung ist vorteilhafterweise zum Trennen des Antriebsstrangs im Überlast- oder Blockierfall ausgebildet. Ein sog. Auslösemoment dieser mechanischen Überlastsicherung ist vorzugsweise so ausgelegt, dass der Antriebsstrang der Werkzeugmaschine während eines normalen Betriebs der Werkzeugmaschine nicht getrennt wird. Es ist im Sinne der Erfindung bevorzugt, dass die vorgeschlagene mechanische Überlastsicherung erst bei extrem harten Blockierfällen auslöst, um die Werkzeugmaschine und/oder ihre Komponenten vor Schäden zu schützen. Insbesondere kann mit der Erfindung das Drehmoment im Antriebsstrang sicher begrenzt werden, ohne dass die mechanischen Komponenten der Werkzeugmaschine robust, groß, schwer und möglicherweise überdimensioniert ausgelegt werden müssen. Dadurch kann mit der Erfindung eine besonders kompakte und gut in der Hand liegende Werkzeugmaschine bereitgestellt werden, die ein langes Arbeiten mit der Werkzeugmaschine ermöglicht. Es war vollkommen überraschend, dass die vorgeschlagene mechanische Überlastsicherung insbesondere bei Werkzeugmaschinen mit torsionssteifen Werkzeugen Verwendung finden kann. Tests haben gezeigt, dass die vorgeschlagene mechanische Überlastsicherung zu einer besonders guten Schutzwirkung bei Kernbohrgeräten führt, die als Werkzeug mit einer Bohrkrone verbindbar sind. Selbstverständlich kann die Erfindung auch in anderen Werkzeugmaschinen, wie Schraubgeräten oder Akku-Schraubern, eingesetzt werden.

Die Formulierung, dass die mechanische Überlastsicherung auf der einen Seite von der Abtriebs- oder der Motorwelle gebildet wird, schließt den Fall mit ein, dass in der Übertragungseinheit der Werkzeugmaschine mehr als diese zwei Wellen vorgesehen sind. Beispielsweise kann die Werkzeugmaschine Zwischenwellen umfassen, mit denen die Drehbewegung bzw. das Drehmoment der Motorwelle auf die Abtriebswelle übertragen werden kann und die vorzugsweise zwischen der Motorwelle und der Abtriebswelle vorgesehen sind. Wenn die Werkzeugmaschine solche Zwischenwellen aufweist, kann es im Sinne der Erfindung auch bevorzugt sein, dass die Pressverbindung der mechanischen Überlastsicherung zwischen dem Verbindungsmittel auf der einen Seite und einer der Wellen der Übertragungseinheit der Werkzeugmaschine auf der anderen Seite gebildet wird. Mit anderen Worten kann die Pressverbindung der mechanischen Überlastsicherung zwischen einer Buchse oder einem Zahnrad als Verbindungsmittel auf der einen Seite und der Motorwelle, der Abtriebswelle oder einer Zwischenwelle auf der anderen Seite gebildet werden.

Mit der Erfindung können die bevorzugt kurzzeitig auftretenden Spitzendrehmomente im Antriebsstrang erheblich vermindert werden. Die Erfindung stellt eine mechanische Vorrichtung zur Trennung des Antriebsstrangs der Werkzeugmaschine im Blockierfall dar, wobei mit der Erfindung trotz Vorhandensein von elektronischen und/oder mechatronischen Funktionen ein wirksamer Schutz des Antriebsstrangs der Werkzeugmaschine vor mechanischen Schäden im Blockierfall bereitgestellt werden kann. Insbesondere kann mit der Erfindung das Drehmoment im Antriebsstrang reduziert werden, so dass die Mechanik der Werkzeugmaschine im Blockierfall wirksam geschützt werden kann.

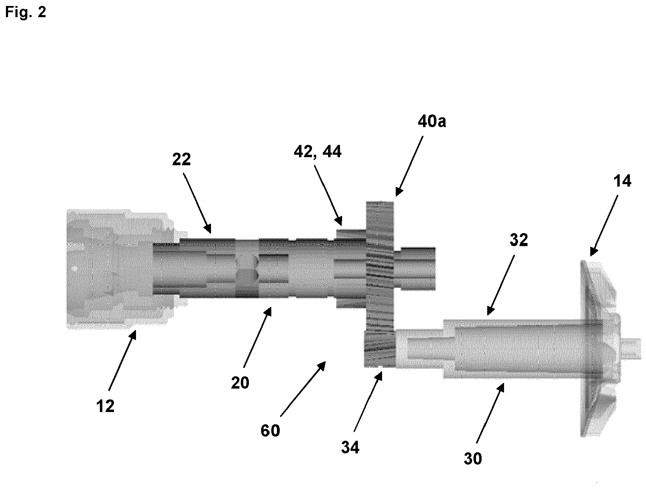

Es ist im Sinne der Erfindung bevorzugt, dass die Abtriebsseite des Antriebsstrangs in Richtung eines Werkzeugs der Werkzeugmaschine orientiert ist und die Antriebsseite des Antriebsstrang in Richtung eines Motors der Werkzeugmaschine orientiert ist (siehe auch: Fig. 2). Die Abtriebsseite des Antriebsstrangs stellt vorzugsweise eine «langsame» bzw. «langsam drehende» Seite des Antriebsstrangs dar, während die Antriebsseite des Antriebsstrang die «schnelle» oder «schnell drehende» Seite des Antriebsstrangs darstellt. Die schnelle Seite des Antriebsstrangs liegt über die Motorwelle mit dem Motor der Werkzeugmaschine verbunden vor, während die langsame Seite des Antriebsstrangs über die Abtriebswelle mit dem Werkzeug der Werkzeugmaschine verbunden vorliegt. Bei der Werkzeugmaschine kann es sich beispielsweise um ein Kernbohrgerät handeln, das als Werkzeug eine Bohrkrone aufweist. Die schnelle Seite des Antriebsstrangs kann vorzugsweise auch als «Motorseite» des Antriebsstrangs der Werkzeugmaschine bezeichnet werden.

Wenn die Vorrichtung zur mechanischen Überlastsicherung ein Zahnrad als Verbindungsmittel aufweist, ist es im Sinne der Erfindung bevorzugt, dass die Vorrichtung zur mechanischen Überlastsicherung darüber hinaus eine Kupplungshülse aufweisen kann, die formschlüssig mit dem Zahnrad verbunden vorliegt. Im Kontext der vorliegenden Erfindung kann auf diese Weise eine Pressverbindung zwischen der Abtriebswelle der mechanischen Überlastsicherung und einer Kupplungshülse hergestellt werden. Die Kupplungshülse liegt formschlüssig mit dem Zahnrad verbunden vor. Somit liegt das Zahnrad über die Kupplungshülse mit der Abtriebswelle verbunden vor, so dass sich die Abtriebswelle dreht, wenn das mit ihr verbundene Zahnrad von außen angetrieben wird. Dieser äußere Antrieb erfolgt im Kontext der vorliegenden Erfindung von der Motorwelle des Antriebsstrangs der Werkzeugmaschine, die ihrerseits von dem Motor der Werkzeugmaschine zu einer Drehbewegung angetrieben wird. Durch die Drehung des Motors der Werkzeugmaschine wird die Motorwelle zu einer Drehbewegung angetrieben. Die Ritzel der Motorwelle greifen in die Zwischenräume zwischen den Zähnen des Zahnrads ein, so dass die Drehbewegung der Motorwelle auf das Zahnrad und die damit verbundene Abtriebswelle übertragen wird.

Alternativ kann eine Pressverbindung der mechanischen Überlastsicherung zwischen der Motorwelle und der Kupplungshülse bestehen, wobei die Motorwelle über die Kupplungshülse formschlüssig mit dem Zahnrad verbunden vorliegt. Dadurch kann eine Drehung der Motorwelle über das Zahnrad auf die Abtriebswelle übertragen werden. Wenn die mechanische Überlastsicherung eine Buchse als Verbindungsmittel umfasst, kann eine Pressverbindung zwischen der Buchse und der Motorwelle oder der Abtriebswelle gebildet werden kann, um die Drehbewegung des Motorwelle auf die Abtriebswelle zu übertragen.

In einer bevorzugten Ausführungsform der Erfindung kann die Vorrichtung zur mechanischen Überlastsicherung eine Kupplungshülse aufweisen, die formschlüssig mit dem Zahnrad verbunden vorliegt, wobei die Abtriebswelle über eine Pressverbindung mit der Kupplungshülse verbunden vorliegt. In dieser bevorzugten Ausführungsform der Erfindung liegt die mechanische Überlastsicherung auf der Abtriebsseite des Antriebsstrangs vor, wobei die Abtriebsseite des Antriebsstrangs die langsamer drehende Seite des Antriebsstrangs darstellt. Das bedeutet im Sinne der Erfindung bevorzugt, dass die Vorrichtung auf der Abtriebsseite des Antriebsstrangs vorgesehen ist, d.h. auf der Seite, die in Richtung des Werkzeugs der Werkzeugmaschine orientiert ist. Auf diese Weise kann ein für die Begrenzung des Drehmoments im Antriebsstrang ausreichender Durchrutschwinkel ermöglicht werden bei gleichzeitig geringen Anforderungen an die thermische Stabilität und das Fressverhalten der Pressverbindung. Mit der Erfindung kann eine besonders langlebige Überlastsicherung in einer Werkzeugmaschine bereitgestellt werden, die darüber hinaus aufgrund des vergleichsweise großen zur Verfügung stehenden Bauraums einfach hergestellt und in die Werkzeugmaschine integriert werden kann. Die Vorsehung der mechanischen Überlastsicherung auf der Abtriebsseite kann wegen der dort auftretenden geringeren Drehzahlen und aufgrund des größeren zur Verfügung stehenden Bauraums bevorzugt sein.

Die mechanische Überlastsicherung kann auch auf der Antriebsseite des Antriebsstrangs angeordnet vorliegen. Das ist dann der Fall, wenn die Vorrichtung zur mechanischen Überlastsicherung durch eine Pressverbindung zwischen dem Verbindungsmittel auf der einen Seite und der Motorwelle auf der anderen Seite gebildet wird. Diese Ausgestaltung der Erfindung ist besonders bevorzugt, wenn auf der Abtriebsseite wenig Bauraum zur Verfügung steht.

Es ist im Sinne der Erfindung bevorzugt, dass die Pressverbindung zwischen der Abtriebs- oder Motorwelle der vorgeschlagenen Vorrichtungen und dem Zahnrad bzw. der Kupplungshülse so ausgelegt ist, dass das maximal im Antriebsstrang zu erwartende Drehmoment unter normalen Betriebsbedingungen sicher übertragen wird. Darüber hinaus ist die vorgeschlagene mechanische Überlastsicherung dazu eingerichtet, das im Antriebsstrang zu übertragende Drehmoment M der Pressverbindung auf einen Wert M_Grenz zu begrenzen, wobei M_Grenz kleiner ist als das Drehmoment M_B, das im Blockierfall ("Blockiermoment") auftritt. Durch diese Auslegung der Vorrichtung bzw. der Pressverbindung zwischen den Verbindungspartnern kann ein wirksamer Schutz der Werkzeugmaschine bzw. ihrer Komponenten im Antriebsstrang erreicht werden. Dabei ist die vorgeschlagene mechanische Überlastsicherung im Gegensatz zur mechanischen Rutschkupplung vorzugsweise nicht für einen Dauerbetrieb ausgelegt. Vielmehr ist es im Kontext der vorliegenden Erfindung vorgesehen, dass das Drehmoment M im Antriebsstrang durch die Erfindung nur bei extrem großen Überlast- oder Blockierfällen begrenzt wird. Es ist im Sinne der Erfindung bevorzugt, dass die vorgeschlagene mechanische Überlastsicherung im Blockierfall durchrutscht, so dass das Drehmoment im Antriebsstrang begrenzt wird.

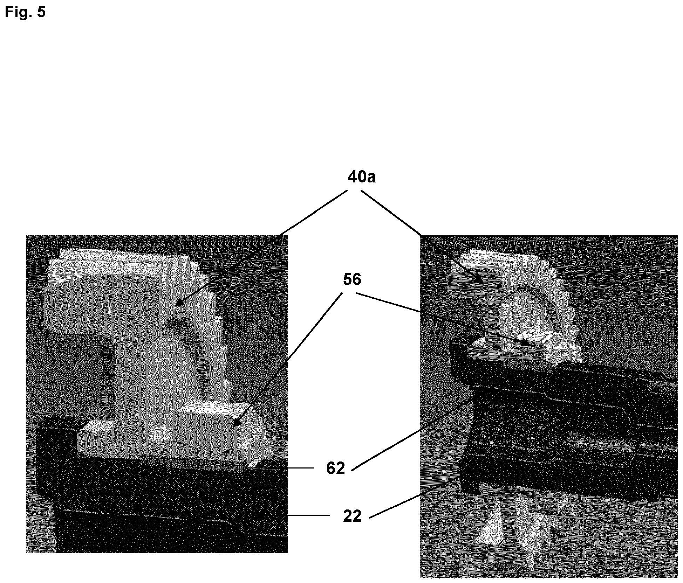

Es ist im Sinne der Erfindung bevorzugt, dass die Pressverbindung einen ersten und einen zweiten Gleitpartner umfasst, wobei der erste Gleitpartner Bestandteil der Abtriebswelle oder der Motorwelle ist und eine erste Gleitfläche umfasst und der zweite Gleitpartner Bestandteil des Zahnrads oder der Kupplungshülse ist und eine zweite Gleitfläche umfasst, wobei vorzugsweise mindestens eine der Reibflächen eine Oberflächenbeschichtung aufweisen kann. Vorzugsweise kann die Oberflächenbeschichtung ausgewählt sein aus einer Gruppe umfassend: Hartverchromung, Nitrierung, zusätzliches Phosphatieren und/oder Nitrocarburieren, ohne darauf beschränkt zu sein. Besonders bevorzugt kann eine Molybdän-Beschichtung zwischen dem Zahnrad und einer Welle des Leistungsstrangs der Werkzeugmaschine verwendet werden, um eine optimale Haftung bzw. Reibung zwischen den Gleitpartnern zu gewährleisten. Mit der Molybdän-Beschichtung kann ein «Fressen» zwischen den Gleitpartnern wirksam vermindert oder vermieden werden. Darüber hinaus kann das Weiterrutschen der Gleitpartner der Pressverbindung vermieden werden, so dass die Werkzeugmaschine bzw. ihr Motor vorteilhafterweise innerhalb von Millisekunden zum Stehen gebracht werden kann. Es war vollkommen überraschend, dass ein so schnelles Abbremsen der Werkzeugmaschine bzw. ihres Motors bei gleichzeitig kompaktem Design der Werkzeugmaschine ermöglicht werden kann. Mit der Erfindung können somit deutlich schnellere Bremszeiten erreicht werden als bei Kupplungen mit Bronzescheiben, wie sie in konventionellen Werkzeugmaschinen aus dem Stand der Technik verwendet werden. Die Molybdän-Beschichtung wird beispielsweise in Fig. 5 dargestellt, wobei die Molybdän-Beschichtung in dem in Fig. 5 dargestellten bevorzugten Ausgestaltung der Erfindung zumindest teilweise zwischen dem Zahnrad und der Abtriebswelle vorliegt.

Der erste und zweite Gleitpartner kann im Sinne der Erfindung bevorzugt auch als «Reibpartner» bezeichnet werden, wobei die Gleit- oder Reibpartner ein Gleit- oder Reibpaar bilden. Das Gleit- oder Reibpaar weist vorzugsweise eine geeignete Materialpaarung auf, wobei die einzelnen Gleit- oder Reibpartner zur Bildung der Pressverbindung vorzugsweise Werkzeugstahl, Sintermaterial, Einsatzstahl und/oder Vergütungsstahl umfassen können. Grundsätzlich ist die Verwendung einer Vielzahl von Metallen oder Metalllegierungen als Gleit- oder Reibpartner im Kontext der vorliegenden Erfindung denkbar. Es ist im Sinne der Erfindung bevorzugt, dass die Materialien Metalle oder Metalllegierungen aus unterschiedlichen Urformungsprozessen umfassen können.

Es ist im Sinne der Erfindung bevorzugt, dass die erste Gleitfläche des ersten Gleitpartners auf einer Außenseite der Abtriebswelle angeordnet vorliegt, während die zweite Gleitfläche des zweiten Gleitpartners auf einer Innenseite der Kupplungshülse angeordnet vorliegt, so dass sich die Gleit- oder Reibflächen gegenüber bzw. in Kontakt miteinander angeordnet vorliegen.

Durch eine geeignete Materialauswahl für die ersten und zweiten Gleit- oder Reibpartner, die miteinander die Pressverbindung zwischen der Abtriebswelle und der Kupplungshülle bilden, kann das Durchrutschen der vorgeschlagenen mechanischen Überlastsicherung gefördert werden, wodurch der Antriebsstrang im Blockierfall getrennt und das im Antriebsstrang übertragende Drehmoment begrenzt werden kann. Auf diese Weise können die Werkzeugmaschine und ihre mechanischen Komponenten im Blockierfall wirksam vor Schäden bewahrt werden.

Es ist im Sinne der Erfindung bevorzugt, dass ein Material der Kupplungshülse ausgewählt ist aus einer Gruppe umfassend: Stahl, Messing, Bronze, Keramik. Die Kupplungshülse ist vorzugsweise als Buchse ausgebildet oder kann die Form einer Buchse aufweisen.

Es kann herstellungsbedingt dazu kommen, dass ein Auslösebereich der mechanischen Überlastsicherung unerwünscht weit streut. Diese unerwünscht weite Streuung des Auslösebereichs der vorgeschlagenen Vorrichtung ist insbesondere auf herstellungsbedingte Toleranzen zurückzuführen. Die unerwünschte, weite Streuung des Auslösebereichs kann dadurch reduziert werden, dass die Pressverbindung eine Außenfläche aufweist, wobei auf diese Außenfläche ein Spannring aufpressbar ist. Dadurch kann der Auslösebereich der mechanischen Überlastsicherung eingestellt und die durch herstellungsbedingte Toleranzen weite Streuung des Auslösebereichs reduziert werden. Es ist im Sinne der Erfindung bevorzugt, dass der Spannring kraft- und/oder weggesteuert aufgepresst wird. Darüber hinaus kann die Außenfläche einen Konuswinkel umfassen. Mit anderen Worten kann als Abhilfemaßnahme gegenüber fertigungsbedingten Toleranzen ein bevorzugt kraftgesteuertes Aufpressen eines außenliegenden Spannrings vorgenommen werden, wobei der Spannring auf einen außenliegenden bevorzugt flachen Konuswinkel der Pressverbindung aufgepresst werden kann.

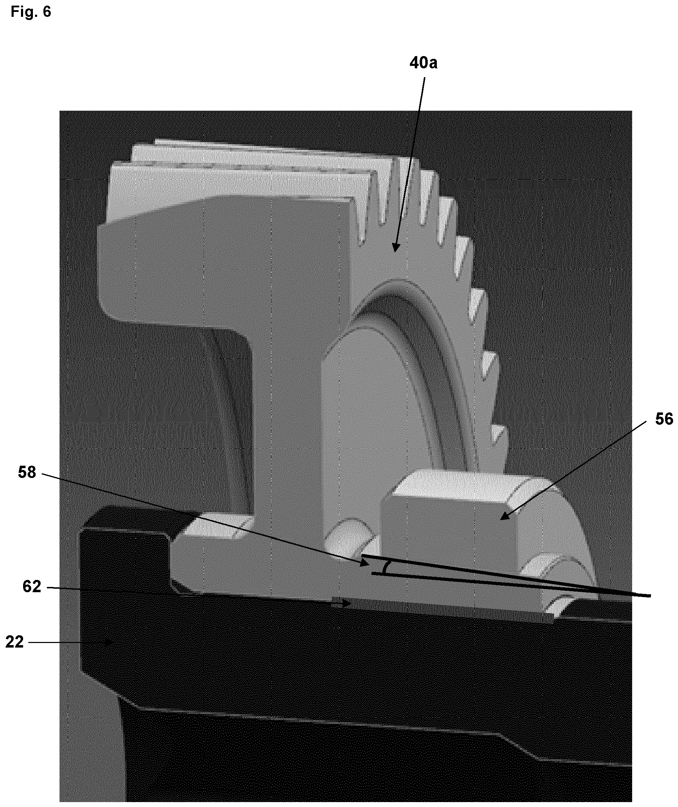

Es ist im Sinne der Erfindung bevorzugt, dass der Spannring als konischer Ring ausgebildet ist, der kraftgesteuert auf die Außenfläche der Pressverbindung aufgepresst wird und auf diese Weise den Auslösebereich der mechanischen Überlastsicherung einschränkt. Alternativ oder ergänzend kann es im Sinne der Erfindung bevorzugt sein, dass der Spannring weggesteuert auf die Außenfläche der Pressverbindung aufgepresst wird, so dass vorteilhafterweise auf diese Weise der Auslösebereich der mechanischen Überlastsicherung einschränkt wird. Dabei ist vorzugsweise auch eine Außenfläche der Buchse konisch ausgebildet. Insbesondere kann mit der Erfindung eine sehr geringe Abweichung beim Auslösen der mechanischen Überlastsicherung erreicht werden. Diese sehr geringe Abweichung beim Auslösen der mechanischen Überlastsicherung kann vorteilhafterweise dadurch erreicht werden, dass das zu übertragende Drehmoment und/oder ein gewünschter Auslösewert der mechanischen Überlastsicherung beim Aufpressvorgang mit einer sehr geringen Abweichung eingestellt werden kann. Beim Aufpressvorgang wird mit einer Kraft F auf den bevorzugt konisch ausgebildeten Spannring gedrückt. Dieser Aufpressvorgang kann mit einer definierte Kraft F und/oder entlang eines definierten Wegs S durchgeführt werden. Dabei kann beispielsweise eine Hydraulikpresse verwendet werden. Je höher diese Kraft F, mit der auf den Spannring gedrückt wird, desto größer ist das Drehmoment M, das später mit der erhaltenen Pressverbindung einer Welle der Übertragungseinheit der Werkzeugmaschine auf der einen Seite und Zahnrad und/oder Kupplungshülse auf der anderen Seite übertragen werden kann. Der Begriff «kraftgesteuert» bedeutet im Sinne der Erfindung bevorzugt, dass der Spannring bis zu einer definierten Aufpresskraft axial auf den außenliegenden Kegelbereich der Buchse geschoben wird. Der Begriff «weggesteuert» bedeutet im Sinne der Erfindung bevorzugt, dass der Spannring für einen definierten Weg bevorzugt axial auf den außenliegenden Kegelbereich der Buchse geschoben wird. Der Spannbereich ist vorzugsweise direkt über dem Kontaktbereich der Wellen und der Kupplungshülse angeordnet. Da der Kegelwinkel auf der Außenseite der Buchse bekannt ist, kann auf diese Weise mit Hilfe der aufgebrachten Aufpresskraft bzw. des definierten Verschiebewegs die Radialvorspannung der Verbindung aus Abtriebs- oder Motorwelle und Kupplungshülse eingestellt werden. Dabei kann der Spannring über einen Konus geschoben werden, so dass der Presssitz, der die Verbindung zwischen der Welle und dem Spannring ausmacht, vorteilhafterweise vergrößert werden kann. Vorzugsweise wird der Spannring mit einer definierten Aufpresskraft und/oder für eine bestimmte Weglänge auf die Welle geschoben und dadurch auf der Welle befestigt. Der Konus verfügt vorteilhafterweise über eine geneigte Oberfläche, deren Neigung durch den Konuswinkel bestimmt wird (vgl. Figur 6).

In einem zweiten Aspekt betrifft die Erfindung ein Verfahren zur Herstellung einer mechanischen Überlastsicherung. Die für die mechanische Überlastsicherung eingeführten Begriffe, Definitionen und technischen Vorteile gelten vorzugsweise für das Herstellungsverfahren analog. Das Herstellungsverfahren ist durch folgende Verfahrensschritte gekennzeichnet:
a) Herstellung einer Pressverbindung zwischen der Abtriebswelle oder der Motorwelle auf der einen Seite und der Kupplungshülse der Vorrichtung auf der anderen Seite,
b) Erfassen der zur Herstellung der Pressverbindung erforderlichen Aufpresskraft,
c) Ermittlung des Auslösemoments der Vorrichtung,
d) Berechnung einer Aufpresskraft und/oder eines Verschiebewegs für den Spannring,
e) Aufpressen des Spannrings auf die Pressverbindung zwischen der Abtriebswelle oder der Motorwelle und der Kupplungshülse der Vorrichtung mit der zuvor berechneten Aufpresskraft und/oder des zuvor berechneten Verschiebewegs,
f) erneute Ermittlung des Auslösemoments der Vorrichtung.

Es ist im Sinne der Erfindung bevorzugt, dass mit dem vorgeschlagenen Herstellungsverfahren insbesondere die Pressverbindung zwischen der Abtriebswelle oder der Motorwelle des Antriebsstrangs und der Kupplungshülse hergestellt wird. Dadurch wird im Rahmen des vorgeschlagenen Herstellungsverfahrens insbesondere das Zahnrad, das von der Motorwelle der Werkzeugmaschine angetrieben werden kann, über die Kupplungshülse mit der Abtriebswelle oder der Motorwelle verbunden. Vorzugsweise wird im Kontext des vorgeschlagenen Herstellungsverfahrens das Zahnrad auf die Abtriebswelle oder der Motorwelle aufgepresst, wobei zwischen dem Zahnrad und der Abtriebswelle oder der Motorwelle die Kupplungshülse eingefügt werden kann. Dabei wird die zur Herstellung der Pressverbindung erforderlichen Aufpresskraft gemessen, wobei diese zur Herstellung der Pressverbindung erforderliche Aufpresskraft im Kontext der vorliegenden Erfindung bevorzugt als "erste Aufpresskraft" bezeichnet wird. Die erste Aufpresskraft kann vorzugsweise mit Hilfe einer Servopresse gemessen werden. Dabei können beispielsweise Kräfte von bis zu 30 Kilo-Newton (kN) eingesetzt werden, wobei eine Messgenauigkeit bei der Ermittlung der ersten Aufpresskraft beispielsweise bei 1 % der aufgewendeten Kraft liegt.

Anschließend wird das Auslösemoment der so erhaltenen Pressverbindung kontrolliert, indem das Auslösemoment der mechanischen Überlastsicherung ermittelt wird. Dieser Verfahrensschritt wird im Sinne der Erfindung bevorzugt auch als "Kontrolle" des Auslösemoments der mechanischen Überlastsicherung bezeichnet. Das Auslösemoment kann beispielsweise mit Hilfe einer Drehmomentmesswelle kontrolliert werden, wobei die Drehmomentmesswelle vorzugsweise dazu eingerichtet ist, ein Auslösemoment zu ermitteln.

Anschließend können die Aufpresskraft und/oder der Verschiebeweg für den Spannring berechnet werden, wobei die Aufpresskraft und/oder der Verschiebeweg, die für das Aufpressen des Spannrings erforderlich sind, im Sinne der Erfindung bevorzugt als "zweite Aufpresskraft" und/oder als "zweiter Verschiebeweg" bezeichnet werden. Es kann mit Hilfe einer Software-Lösung oder eines Computer-Programmprodukts eine fiktive Anpresskraft oder ein fiktiver Verschiebeweg berechnet werden, der anschließend für das Aufpressen des Spannrings verwendet werden kann. Anschließend wird der Spannring mit der zuvor berechneten Aufpresskraft und/oder dem zuvor berechneten Verschiebeweg auf die Pressverbindung zwischen der Abtriebswelle und der Kupplungshülse der mechanischen Überlastsicherung aufgepresst.

Anschließend wird eine erneute "Kontrolle" des Auslösemoments der mechanischen Überlastsicherung durchgeführt, um zu prüfen, ob sich etwaige Abweichungen des Auslösemoments und/oder Toleranzen reduziert haben. Wenn bei der erneuten "Kontrolle" des Auslösemoments beispielsweise festgestellt wird, dass das Auslösemoment zu niedrig ist, kann das Aufpressen des Spannrings mit einer größeren Aufpresskraft wiederholt werden, um das Auslösemoment der mechanischen Überlastsicherung zu erhöhen. Anschließend kann das veränderte Auslösemoment erneute gemessen bzw. kontrolliert werden. Die letztgenannten Schritte können so lange wiederholt werden, bis ein gewünschtes Auslösemoment und/oder minimale Abweichungen des Auslösemoments erreicht werden.

Vorteilhafterweise kann mit dem vorgeschlagenen Verfahren eine wirksame Vorrichtung zur mechanischen Überlastsicherung in einem Antriebsstrang einer Werkzeugmaschine bereitgestellt werden, die besonders geringe Abweichungen des Auslösemoments im Blockierfall aufweist.

In einem Ausführungsbeispiel betrifft die Erfindung eine Vorrichtung zur mechanischen Überlastsicherung in einem Antriebsstrang einer Werkzeugmaschine, wobei die Abtriebswelle über ein Zahnrad von der Motorwelle antreibbar ist und das Zahnrad direkt auf die Abtriebswelle gepresst werden kann. In dieser Konstellation bildet das Komponentenpaar aus Abtriebswelle und Zahnrad eine mechanische Überlastsicherung. Die Verbindung zwischen der Abtriebswelle und dem Zahnrad kann vorzugsweise über eine Pressverbindung hergestellt werden, wobei die mechanische Überlastsicherung dann vorzugsweise direkt in der der Pressverbindung Zahnrad-Welle integriert vorliegen kann. Die Kupplungshülse kann in dieser Ausgestaltung der Erfindung weggelassen werden, wodurch die Komplexität der Vorrichtung verringert und ihre Herstellung vereinfacht wird.

In einem weiteren Ausführungsbeispiel der Erfindung kann die Vorrichtung zur mechanischen Überlastsicherung auf der Antriebsseite des Antriebsstrangs angeordnet vorliegen. Die mechanische Überlastsicherung kann dann von dem Komponentenpaar Motorwelle und Zahnrad gebildet werden, wobei eine Kupplungshülse zwischen der Motorwelle und dem Zahnrad verwendet werden kann oder auch nicht. Wenn eine Kupplungshülse verwendet wird, ist es im Sinne der Erfindung bevorzugt, dass die Kupplungshülse formschlüssig mit dem Zahnrad und die Motorwelle über eine Pressverbindung mit der Kupplungshülse verbunden vorliegt. Die Vorsehung der mechanischen Überlastsicherung auf der Antriebsseite des Antriebsstrangs kann vor allem dann bevorzugt sein, wenn eine Integration auf der Abtriebsseite nicht möglich ist, beispielsweise weil auf der Abtriebsseite zu wenig Bauraum zur Verfügung steht.

In einem weiteren Ausführungsbeispiel der Erfindung kann die Abtriebswelle über ein Zahnrad von der Motorwelle angetrieben werden, wobei die Vorrichtung zur mechanischen Überlastsicherung eine Kupplungshülse aufweist, die formschlüssig mit dem Zahnrad verbunden vorliegt, wobei die Abtriebswelle über eine Pressverbindung mit der Kupplungshülse verbunden vorliegt.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung der Vorrichtung zur mechanischen Überlastsicherung
- Fig. 2: Seitenansicht einer bevorzugten Ausgestaltung der Vorrichtung zur mechanischen Überlastsicherung
- Fig. 3: Detailansicht einer bevorzugten Ausgestaltung der Vorrichtung zur mechanischen Überlastsicherung
- Fig. 4: Ansicht einer bevorzugten Ausgestaltung der Vorrichtung zur mechanischen Überlastsicherung mit Spannring
- Fig. 5: Ansicht einer bevorzugten Ausgestaltung der Vorrichtung zur mechanischen Überlastsicherung mit Spannring zur Darstellung der Anordnung der Molybdän-Beschichtung
- Fig. 6: Ansicht einer bevorzugten Ausgestaltung der Vorrichtung zur mechanischen Überlastsicherung mit Spannring zur Darstellung des Konuswinkels

### Ausführungsbeispiele und Figurenbeschreibung:

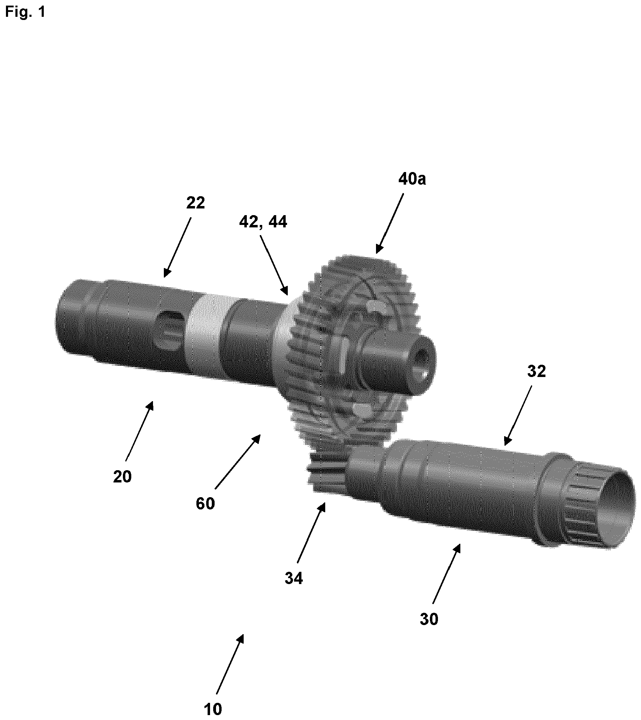

Figur 1 zeigt eine bevorzugte Ausgestaltung der Vorrichtung 10 zur mechanischen Überlastsicherung. Dargestellt ist insbesondere eine mechanische Überlastsicherung 10, die auf der Abtriebsseite 20 des Antriebsstrangs angeordnet ist. Zu sehen sind in Figur 1 insbesondere die Abtriebsseite 20 und die Antriebsseite 30 des Antriebsstrangs (ohne Bezugszeichen) einer Werkzeugmaschine (nicht dargestellt). Die Abtriebsseite 20 des Antriebsstrangs weist eine Abtriebswelle 22 auf, die über ein Zahnrad 40a mit einer Motorwelle 32 der Antriebsseite 30 des Antriebsstrangs verbunden werden kann. Dazu kann die Motorwelle 32 an der motorabgewandten Seite ein Ritzel 34 aufweisen, das mit den Zähnen des Zahnrads 40a in Eingriff gelangen kann. Auf diese Weise wird eine Drehbewegung der Motorwelle 32 auf der Antriebsseite 30 des Antriebsstrangs auf die Abtriebsseite 20 und die Abtriebswelle 22 übertragen. Das Zahnrad 40a kann als Verbindungsmittel 40 zur Verbindung der Motorwelle 32 und der Abtriebswelle 22 betrachtet werden. Alternativ kann eine Buchse 40b (nicht dargestellt) verwendet werden, um die Drehbewegung und/oder das Drehmoment der Motorwelle 32 auf die Abtriebswelle 22 zu übertragen. Die mechanische Einheit zur Übertragung der Drehbewegung und/oder des Drehmoments des Motors 14 der Werkzeugmaschine auf die Werkzeugaufnahme 12 wird im Sinne der Erfindung bevorzugt als «Übertragungseinheit 60» bezeichnet. Die Übertragungseinheit 60 der Werkzeugmaschine umfasst vorzugsweise die Motorwelle 32, die Abtriebswelle 22, sowie etwaige Zwischenwellen, sowie die Vorrichtung 10 zur mechanischen Überlastsicherung und deren Verbindungsmittel 40, wie Zahnräder 40a oder Buchsen 40b. In den Figuren wird insbesondere die Ausgestaltung der Erfindung dargestellt, in der das Verbindungsmittel 40 als Zahnrad 40a ausgebildet ist. Die in den Figuren dargestellte Übertragungseinheit 60 der Werkzeugmaschine umfasst insbesondere eine Motorwelle 32 und eine Abtriebswelle 22. Die vorgeschlagene Vorrichtung 10 zur mechanischen Überlastsicherung kann aber insbesondere auch Zwischenwellen (nicht dargestellt) umfassen, die neben der Motorwelle 32 und der Abtriebswelle 22 zur Übertragung der Drehbewegung und/oder des Drehmoments des Motors 14 an das Werkzeug der Werkzeugmaschine verwendet werden.

Die Motorwelle 32 kann beispielsweise eine Anzahl von Z = 11 Zähnen aufweisen. Das Zahnrad 40a kann beispielsweise eine Anzahl von Z = 58 Zähnen aufweisen. Selbstverständlich sind auch andere Kombinationen von Anzahlen von Zähnen vorstellbar. Die genannte Kombination von elf Zähnen an der Motorwelle 32 und achtundfünfzig Zähnen am Zahnrad 40a der vorgeschlagenen Überlastsicherung 10 hat sich als besonders geeignet zur Übertragung der auftretenden Drehmomente erwiesen, aber auch dazu, im Blockierfall eine Trennung des Antriebsstrangs zu ermöglichen. Durch die Drehung des Motors 14 (siehe Fig. 2) der Werkzeugmaschine wird die Motorwelle 32 zu einer Drehbewegung angetrieben. Die Zähne 34 der Motorwelle 32 greifen in die Zwischenräume zwischen den Zähnen des Zahnrads 40a ein, so dass die Drehbewegung der Motorwelle 32 auf das Zahnrad 40a und die damit verbundene Abtriebswelle 22 übertragen wird.

Das Zahnrad 40a ist formschlüssig mit einer Kupplungshülse 42 verbunden, die wiederum mit Hilfe einer Pressverbindung 44 mit der Abtriebswelle 22 verbunden ist. Auf diese Weise ist das Zahnrad 40a mit der Abtriebswelle 22 verbunden, so dass eine Drehbewegung des Zahnrads 40a auch zu einer Drehbewegung der Abtriebswelle 22 auf der Abtriebsseite 20 des Antriebsstrangs führt.

Figur 2 zeigt eine Seitenansicht einer bevorzugten Ausgestaltung der Vorrichtung 10 zur mechanischen Überlastsicherung 10, wobei auch diese mechanische Überlastsicherung auf der Abtriebsseite 20 des Antriebsstrangs angeordnet vorliegt. Dargestellt ist in Figur 2 auch eine mögliche Anordnung des Antriebsstrangs innerhalb der Werkzeugmaschine (nicht dargestellt). Auf der linken Seite der Figur 2 ist eine Aufnahme 12 für ein Werkzeug der Werkzeugmaschine angedeutet. Bei der Werkzeugmaschine kann es sich beispielsweise um ein Kernbohrgerät handeln. Das Werkzeug der Werkzeugmaschine kann beispielsweise von einer Bohrkrone gebildet werden, wobei eine Bohrkrone ein vergleichsweise torsionssteifes Werkzeug darstellt. Die Werkzeugaufnahme 12 liegt vorzugsweise an einem ersten Ende der Abtriebswelle 22 des Antriebsstrangs angeordnet vor, während das zweite Ende der Abtriebswelle 22 ein werkzeugaufnahme-abgewandtes Ende der Abtriebswelle 22 bildet. An diesem werkzeugaufnahmeabgewandten Ende ist die Abtriebswelle 22 mit einer Kupplungshülse 42 verbunden, wobei die Verbindung von einer Pressverbindung 44 gebildet wird. Mit anderen Worten besteht eine Pressverbindung 44 zwischen der Abtriebswelle 22 und der Kupplungshülse 42. Die Kupplungshülse 42 ist darüber hinaus formschlüssig mit einem Zahnrad 40a verbunden, das über eine Motorwelle 32 der Antriebsseite 30 des Antriebsstrangs angetrieben werden kann. Die Motorwelle 32 weist an ihrem ersten Ende ein Ritzel 34 auf, das mit dem Zahnrad 40a zur Übertragung einer Drehbewegung zusammenwirken kann. An ihrem zweiten Ende ist die Motorwelle 32 mit dem Motor 14 der Werkzeugmaschine verbunden. Aufgrund der Drehgeschwindigkeit des Motors 14 der Werkzeugmaschine stellt die Antriebsseite 30 mit der Motorwelle 32 die schnelldrehende Seite des Antriebsstrangs dar, während die Abtriebsseite 20 mit der Abtriebswelle 22 die langsam-drehende Seite des Antriebsstrangs dar.

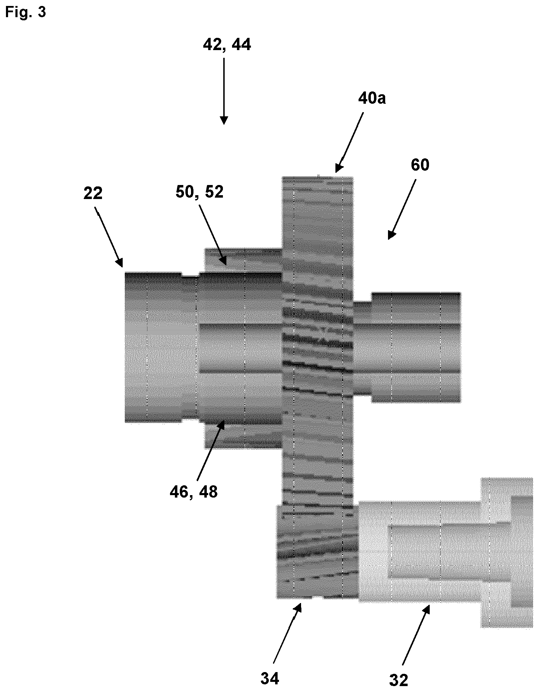

Figur 3 zeigt eine Detailansicht einer bevorzugten Ausgestaltung der Vorrichtung 10 zur mechanischen Überlastsicherung. Die Pressverbindung 44 zwischen der Abtriebswelle 22 und der Kupplungshülse 42 erlaubt ein gegeneinander Gleiten bzw. Reiben der Abtriebswelle 22 und der Kupplungshülse 42.

In diesem Sinne stellen die Abtriebswelle 22 und die Kupplungshülle 42 Reib- oder Gleitpartner in einem Reib- oder Gleitpaar dar. Insbesondere stellt die Abtriebswelle 22 einen ersten Gleitpartner 46 dar und die Abtriebswelle 22 weist eine erste Reib- oder Gleitfläche 48 auf. Die Kupplungshülse 42 stellt einen zweiten Gleitpartner 50 dar und die Kupplungshülse 42 weist eine zweite Reib- oder Gleitfläche 52 auf. Die Gleit- oder Reibflächen 48, 52 bilden Kontaktflächen zwischen der Abtriebswelle 22 und der Kupplungshülse 42, wobei mindestens eine der Gleit- oder Reibflächen 48, 52 eine Oberflächenbeschichtung aufweisen kann. Die Vorsehung einer Oberflächenbeschichtung stellt eine Maßnahme dar, um ein dauerhaft im Wesentlichen gleichbleibendes Auslösemoment für eine Trennung des Antriebsstrangs im Blockierfall der Werkzeugmaschine zu gewährleisten. Die Gleit- oder Reibflächen 48, 52 können beispielsweise hartverchromt und/oder nitriert sein und/oder eine Molybdän-Beschichtung aufweisen, ohne darauf beschränkt zu sein. Eine weitere Maßnahme, um ein dauerhaft im Wesentlichen gleichbleibendes Auslösemoment für eine Trennung des Antriebsstrangs im Blockierfall der Werkzeugmaschine sicherzustellen, besteht in der Auswahl geeigneter Materialien für die Gleit- oder Reibflächen 48, 52 der Gleitpartner 46, 50. Zum Einsatz kommen können beispielsweise Werkzeugstahl oder Sintermaterialien. Die Kupplungshülse 42, die vorzugsweise zwischen das Zahnrad 40a und die Abtriebswelle 22 gepresst wird, kann beispielsweise Stahl, Messing, Bronze und/oder Keramik umfassen oder aus mindestens einem der genannten Materialien hergestellt werden. Selbstverständlich sind auch Materialkombinationen oder Legierungen zur Herstellung der Gleitpartner 46, 50 bzw. der Kupplungshülse 42 denkbar.

Vorzugsweise werden die Materialien der Gleitpartner 46, 50 bzw. der Kupplungshülse 42 so ausgewählt, dass die mechanische Überlastsicherung 10 insbesondere bei harten Blockierfällen auslöst, d.h. den Antriebsstrang trennt. Auf diese Weise kann das Drehmoment im Antriebsstrang begrenzt werden und die Komponenten der Werkzeugmaschine werden vor Schäden im Blockierfall wirksam geschützt. Ein Grundgedanke, der der Erfindung zugrunde liegt, besteht darin, das zu übertragende Drehmoment der Pressverbindung 44 auf einen Wert M_Grenz zu begrenzen, der kleiner als das maximale Blockiermoment M_B ist. Die Materialien der Gleitpartner 46, 50 bzw. der Kupplungshülse 42 sind insbesondere so ausgewählt bzw. ausgelegt, dass die erhaltene Pressverbindung 44 im Blockierfall durchrutscht und auf diese Weise das Drehmoment im Antriebsstrang begrenzt.

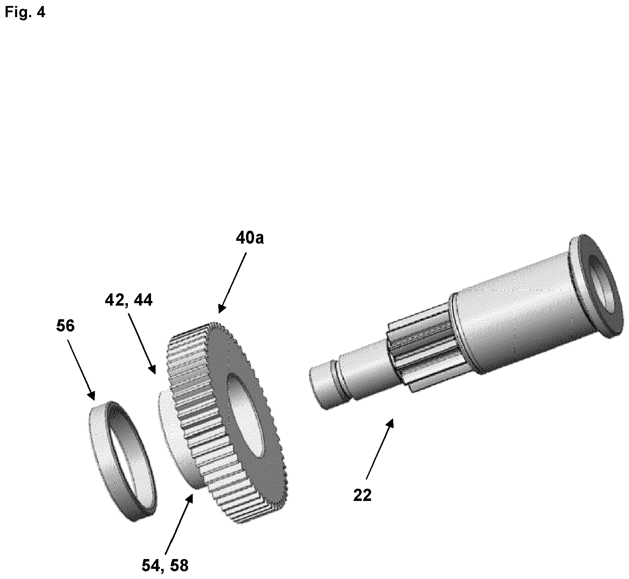

Figur 4 zeigt eine Ansicht einer bevorzugten Ausgestaltung der Vorrichtung 10 zur mechanischen Überlastsicherung mit Spannring 56. Die Vorsehung eines zusätzlichen Spannrings 56 im Bereich der Pressverbindung 44 kann fertigungsbedingte Toleranzen der mechanischen Überlastsicherung 10 reduzieren, so dass durch den Spannring 56 das Auslösemoment der mechanischen Überlastsicherung 10 genauer eingestellt und kontrolliert werden kann. Der Spannring 56 wird insbesondere auf eine Außenfläche 54 der Pressverbindung 44 aufgepresst, wobei das Aufpressen des Spannrings 56 insbesondere kraftgesteuert erfolgt. Nach Aufpressen des Spannrings 56 kann das Auslösemoment der mechanischen Überlastsicherung 10 nachgemessen und erforderlichenfalls der Spannring 56 in einem zweiten oder weiteren Aufpress-Schritt fester, d.h. mit einer höheren Aufpresskraft, von außen auf die Pressverbindung 44 aufgepresst werden. Die Außenfläche 54 kann beispielsweis von einer Außenfläche der Kupplungshülse 42 gebildet werden.

Die Pressverbindung 44 weist vorzugsweise einen bevorzugt flachen Konuswinkel 58 auf, auf den der Spannring 56 aufgepresst werden kann. Mit anderen Worten kann die Kupplungshülse 42 nicht ganz zylinderförmig, sondern sich verjüngend ausgebildet sein, so dass die Kupplungshülse 42 einen leicht schräg zulaufenden Hohlzylinder bildet.

Die Schräge der Wände dieses Hohlzylinders werden durch den Konuswinkel 58 bestimmt, wobei der Konuswinkel 58 in einem Bereich von 1 bis 5 Grad, bevorzugt bei 3 Grad liegen kann. Der Konuswinkel 58 wird insbesondere auch in Fig. 6 dargestellt. Der Konuswinkel 58 kann auch größer oder kleiner als der genannte Winkelbereich sein, je nachdem ob eine Beschichtung der Reibpartner verwendet wird oder nicht bzw. je nach Beschaffenheit oder chemischer Zusammensetzung einer etwaigen Beschichtung.

Es ist im Sinne der Erfindung bevorzugt, dass der Spannring 56 von einem konischen Ring gebildet wird, der kraftgesteuert und/oder weggesteuert auf die Pressverbindung 44 aufgepresst werden kann, um als optimale, zusätzliche Komponente der mechanischen Überlastsicherung 10 deren Auslösemoment besser und genauer einstellen zu können. Das Auslösemoment stellt im Sinne der Erfindung dasjenige Drehmoment dar, bei dem die mechanische Überlastsicherung 10 den Antriebsstrang trennt, wenn beispielsweise das Werkzeug der Werkzeugmaschine blockiert oder wenn sich das Werkzeug der Werkzeugmaschine in dem zu bearbeitenden Untergrund verklemmt. Durch die Trennung des Antriebsstrangs durch die mechanische Überlastsicherung 10 in diesem sog. Blockierfall kann das Drehmoment im Antriebsstrang sicher begrenzt werden, so dass die Komponenten der Werkzeugmaschine vor Schäden geschützt werden. Dabei helfen besonders definiert eingestellte Drehmoment-Grenzen, bei denen die mechanische Überlastsicherung 10 auslöst («Auslösemoment»). Solche klar definierten Drehmoment-Grenzen können insbesondere mit Hilfe des kraftgesteuert aufgepressten Spannrings 56 bereitgestellt werden. Der Spannring 56 kann mit einem automatisierten Montagevorgang auf eine Außenfläche 54 der Pressverbindung 44 aufgepresst werden, wobei im Rahmen des Montagevorgangs Drehmomente und Kräfte gemessen werden, um eine optimale Aufpresskraft und/oder einen optimalen Weg zum Aufpressen des Spannrings 56 auf die Pressverbindung 44 zu ermitteln. Auf diese Weise kann das Auslösemoment bzw. seine Genauigkeit verbessert und vorteilhafterweise besonders fein eingestellt werden.

Figur 5 zeigt eine bevorzugte Ausgestaltung der Vorrichtung 10 zur mechanischen Überlastsicherung mit Spannring 56 zur Darstellung der Anordnung der Molybdän-Beschichtung 62. Die Molybdän-Beschichtung 62 liegt bei dem in Figur 5 dargestellten Ausführungsbeispiel der Erfindung zwischen dem Zahnrad 40a und der Abtriebswelle 22 angeordnet vor.

Figur 6 zeigt eine weitere bevorzugte Ausgestaltung der Vorrichtung 10 zur mechanischen Überlastsicherung mit Spannring 56, wobei in Figur 6 insbesondere der Konuswinkel 58 und seine Lage dargestellt wird.

### Bezugszeichenliste

- 10: Vorrichtung zur mechanischen Überlastsicherung
- 12: Werkzeugaufnahme
- 14: Motor
- 20: Abtriebsseite
- 22: Abtriebswelle
- 30: Antriebsseite
- 32: Motorwelle
- 34: Zähne
- 40: Verbindungsmittel
- 40a: Zahnrad
- 40b: Buchse
- 42: Kupplungshülse
- 44: Pressverbindung
- 46: erster Gleitpartner
- 48: erste Gleitfläche
- 50: zweiter Gleitpartner
- 52: zweite Gleitfläche
- 54: Außenfläche
- 56: Spannring
- 58: Konuswinkel
- 60: Übertragungseinheit
- 62: Molybdän-Beschichtung

## Patentansprüche

1. Vorrichtung (10) zur mechanischen Überlastsicherung in einem Antriebsstrang einer Werkzeugmaschine, wobei der Antriebsstrang eine Abtriebsseite (20) mit einer Abtriebswelle (22) und eine Antriebsseite (30) mit einer Motorwelle (32) aufweist,
**dadurch gekennzeichnet, dass**
die Abtriebswelle (22) über ein Verbindungsmittel (40) mit der Motorwelle (32) wirkverbunden vorliegt, wobei die Vorrichtung (10) zur mechanischen Überlastsicherung durch eine Pressverbindung (44) zwischen dem Verbindungsmittel (40) auf der einen Seite und der Motorwelle (32) oder der Abtriebswelle (22) auf der anderen Seite gebildet wird.

2. Vorrichtung (10) nach Anspruch 1
**dadurch gekennzeichnet, dass**
die Vorrichtung (10) zur mechanischen Überlastsicherung darüber hinaus eine Kupplungshülse (42) aufweist, die formschlüssig mit dem Verbindungsmittel (40) verbunden vorliegt.

3. Vorrichtung (10) nach Anspruch 1 oder 2
**dadurch gekennzeichnet, dass**
das Verbindungsmittel (40) von einem Zahnrad (40a) und/oder einer Buchse (40b) gebildet wird.

4. Vorrichtung (10) nach Anspruch 3
**dadurch gekennzeichnet, dass**
die Pressverbindung (44) einen ersten Gleitpartner (46) und einen zweiten Gleitpartner (50) umfasst, wobei der erste Gleitpartner (46) Bestandteil der Abtriebswelle (22) oder der Motorwelle (32) ist und eine erste Gleitfläche (48) umfasst und der zweite Gleitpartner (50) Bestandteil des Zahnrads (40a) oder der Kupplungshülse (42) ist und eine zweite Gleitfläche (52) umfasst, wobei mindestens eine der Gleitflächen (48, 52) eine Oberflächenbeschichtung aufweist.

5. Vorrichtung (10) nach Anspruch 4
**dadurch gekennzeichnet, dass**
die Oberflächenbeschichtung ausgewählt ist aus einer Gruppe umfassend: Hartverchromung, Nitrierung, Molybdän-Beschichtung, zusätzliches Phosphatieren und/oder Nitrocarburieren.

6. Vorrichtung (10) nach einem der Ansprüche 2 bis 5
**dadurch gekennzeichnet, dass**
ein Material der Kupplungshülse (42) ausgewählt ist aus einer Gruppe umfassend: Stahl, Messing, Bronze und/oder Keramik.

7. Vorrichtung (10) nach einem der vorhergehenden Ansprüche
**dadurch gekennzeichnet, dass**
die Vorrichtung (10) dazu eingerichtet ist, das im Antriebsstrang zu übertragende Drehmoment M der Pressverbindung (44) auf einen Wert M_Grenz zu begrenzen, wobei M_Grenz kleiner ist als das Drehmoment M_B, das im Blockierfall auftritt.

8. Vorrichtung (10) nach einem der vorhergehenden Ansprüche
**dadurch gekennzeichnet, dass**
die Pressverbindung (44) eine Außenfläche (54) aufweist, wobei auf diese Außenfläche (54) ein Spannring (56) aufpressbar ist, um einen Auslösebereich der Vorrichtung (10) einzustellen.

9. Vorrichtung (10) nach Anspruch 8
**dadurch gekennzeichnet, dass**
der Spannring (56) kraftgesteuert und/oder weggesteuert aufpressbar ist.

10. Vorrichtung nach Anspruch 8 oder 9
**dadurch gekennzeichnet, dass**
die Außenfläche (54) einen Konuswinkel (58) umfasst.

11. Verfahren zur Herstellung einer Vorrichtung (10) nach einem der Ansprüche 8 bis 10, wobei das Verfahren durch die **folgenden Verfahrensschritte gekennzeichnet** ist:
a) Herstellung einer Pressverbindung (44) zwischen der Abtriebswelle (22) oder der Motorwelle (32) auf der einen Seite und der Kupplungshülse (42) der Vorrichtung (10) auf der anderen Seite,
b) Erfassen der zur Herstellung der Pressverbindung (44) erforderlichen Aufpresskraft,
c) Ermittlung des Auslösemoments der Vorrichtung (10),
d) Berechnung einer Aufpresskraft und/oder eines Verschiebewegs für den Spannring (56),
e) Aufpressen des Spannrings (56) auf die Pressverbindung (44) zwischen der Abtriebswelle (22) oder der Motorwelle (32) und der Kupplungshülse (42) der Vorrichtung (10) mit der zuvor berechneten Aufpresskraft und/oder mit dem zuvor berechneten Verschiebeweg,
f) erneute Ermittlung des Auslösemoments der Vorrichtung (10).
